# EUROPÄISCHE PATENTSCHRIFT

(11) **EP 2 220 460 B1**
(45) Veröffentlichungstag und Bekanntmachung des Hinweises auf die Patenterteilung: **29.07.2015**
(21) Anmeldenummer: 08860820.3
(22) Anmeldetag: 12.12.2008
(51) Int. Cl.: G01D 3/036

(54) **FELDGERÄT ZUR PROZESSINSTRUMENTIERUNG**
FIELD DEVICE FOR PROCESS INSTRUMENTATION
DISPOSITIF DE CHAMP POUR L'INSTRUMENTATION D'UN PROCESSUS

(30) Priorität: 12.12.2007 DE 102007059847
(43) Veröffentlichungstag der Anmeldung: 25.08.2010
(73) Patentinhaber: Siemens Aktiengesellschaft, 80333 München (DE)
(72) Erfinder: CHEMISKY, Eric, F-67250 Soultz sous Forets (FR); GEPPERT, Michael, 77833 Ottersweier (DE); HAHN, Ulrich, 66822 Lebach (DE); ROHRBACH, Simon, 76137 Karlsruhe (DE)
(86) Internationale Anmeldenummer: PCT/EP2008/067451
(87) Internationale Veröffentlichungsnummer: WO 2009/074681

(56) Entgegenhaltungen:
- EP-A- 0 456 168
- DE-A1- 10 146 949
- DE-A1- 19 930 661
- US-A- 4 783 659

## Beschreibung

Die Erfindung betrifft ein Feldgerät zur Prozessinstrumentierung, insbesondere einen Messumformer, mit einem Analogausgang, an welchen eine Zweidrahtleitung zur Übertragung eines analogen Ausgangssignals anschließbar ist, nach dem Oberbegriff des Anspruchs 1.

In der Automatisierungstechnik werden häufig Feldgeräte zur Prozessinstrumentierung eingesetzt, die beispielsweise zur Erfassung und/oder Beeinflussung von Prozessvariablen dienen und durch ein Automatisierungsnetzwerk zum Austausch von Daten miteinander verbunden sind. Feldgeräte, die eine physikalische oder chemische Größe als Prozessvariable erfassen, werden häufig als Messumformer bezeichnet, da sie die jeweilige Größe in einen Messwert umformen und diesen beispielsweise an eine übergeordnete Leitstation oder als Istwert an einen Regler zur weiteren Verarbeitung ausgeben. Beispiele für derartige Messumformer sind Messumformer für Füllstand, Massendurchfluss, Druck, Temperatur, pH-Wert, Leitfähigkeit usw.

Aus der EP 1 192 614 B1 ist ein Messumformer bekannt, der eine physikalische oder chemische Messgröße in ein dem Messwert entsprechendes, auf einer Zweidrahtleitung übertragbares analoges Ausgangssignal umformt. Dazu ist ein geeigneter Sensor für die physikalische oder chemische Messgröße, ein nachgeschalteter Analog/Digital-Umsetzer, eine diesem nachgeordnete Recheneinheit und eine von der Recheneinheit gesteuerte, an die Zweidrahtleitung anschließbare Ausgangsschaltung vorgesehen. Der Sensor formt die Messgröße in ein Sensorsignal um, das in dem Analog/Digital-Umsetzer digitalisiert und in der Recheneinheit zu einem Sollwert aufbereitet wird, mit dem durch eine Regeleinrichtung in der Ausgangsschaltung das analoge Ausgangssignal auf der Zweidrahtleitung eingestellt wird. Der digitale Sollwert als Stromvorgabewert wird in der Ausgangsschaltung zunächst mit einem Digital/Analog-Umsetzer in einen analogen Stromsollwert überführt und durch eine nachfolgende Regelschaltung in einen analogen Schleifenstrom umgesetzt. Der Istwert des Schleifenstroms wird unter Verwendung eines Messelements zur Strom/Spannungs-Wandlung erfasst. Als einfache Messelemente können dazu niederohmige Strommesswiderstände, die auch als Shunts bezeichnet werden, zum Einsatz kommen. Das damit erzeugte Spannungssignal, welches dem Istwert des Schleifenstroms proportional ist, wird einer Vergleichseinrichtung zur Bildung einer Regelabweichung aus dem analogen Stromsollwert und dem Istwert des Schleifenstroms zugeführt. Anhand der Regelabweichung bestimmt ein Regler, der als Analogregler mit einem integrierten Operationsverstärker realisiert ist, zur Ausregelung der Regelabweichung ein Stellsignal für ein Stellglied, das durch eine Transistorschaltung zur Einstellung des Schleifenstroms gebildet wird. Gleichzeitig wird der gemessene analoge Istwert des Schleifenstroms mit Hilfe eines Analog/Digital-Umsetzers digitalisiert und der Recheneinheit als digitaler Istwert zugeführt. Damit ist die Recheneinheit in der Lage, Abweichungen zwischen dem digitalen Istwert und dem digitalen Sollwert zu ermitteln und darauf durch eine entsprechende Nachführung des Sollwerts zu reagieren. Treten unzulässig große Abweichungen auf, wird dies dem Anwender des Feldgeräts mitgeteilt. Dies kann über eine Datenschnittstelle und/oder eine Anzeigevorrichtung zur Übertragung bzw. Anzeige einer Information über die ermittelte Abweichung und damit über den Messfehler erfolgen. Die Datenschnittstelle ist Bestandteil der Ausgangsschaltung und ermöglicht eine Datenkommunikation über die Zweidrahtleitung nach dem HART-Protokoll.

Der Erfindung liegt die Aufgabe zugrunde, ein Feldgerät zur Prozessinstrumentierung mit einem Analogausgang, an welchem eine Zweidrahtleitung zur Übertragung eines analogen Ausgangssignals anschließbar ist, zu schaffen, in welchem eine Überwachung des Schleifenstroms und eine Detektion einer Fehlfunktion des Reglers oder des Stellglieds für den Schleifenstrom mit besonders einfachen Mitteln möglich ist.

Zur Lösung dieser Aufgabe weist das neue Feldgerät der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, dass für die Überwachung des Reglers und des Stellglieds für den Schleifenstrom ein besonders geringer schaltungstechnischer Aufwand benötigt wird. Die Überwachung des Stellsignals auf Einhalten eines vorgebbaren Wertebereichs kann in besonders einfacher Weise mit einem Komparator erfolgen, der fortlaufend überprüft, ob sich das Stellsignal innerhalb eines vorgebbaren Signalbereichs befindet. Die Vorgabe des Signalbereichs erfolgt unter Berücksichtigung der physikalischen Grenzen des Reglerausgangssignals und der jeweiligen schaltungstechnischen Realisierung des Stellglieds. Das Stellsignal ist vorteilhaft in direkter Weise eng mit der Regelabweichung verknüpft und charakteristisch für das Verhalten der Regelung des Schleifenstroms. Mit Hilfe des auf diese Weise erzeugten Anzeigesignals können Fehlerzustände schnell und zuverlässig signalisiert werden.

Alternativ zur Verwendung eines gesonderten Komparators zur Überwachung des Stellsignals ist es selbstverständlich möglich, das Stellsignal über einen Analog/Digital-Umsetzer als digitalisierter Wert auf die Recheneinheit zu führen, welche dann die Überwachung auf Einhalten eines vorgebbaren Wertebereichs übernimmt.

In einer besonderen Ausgestaltung kann der Regler als PI-Regler ausgeführt sein, der in Abhängigkeit der Regelabweichung einen Proportionalanteil und einen Integralanteil der Stellgröße erzeugt. Bei Einsatz eines PI-Reglers führt der Integralanteil dazu, dass bei einer dauerhaften Regelabweichung das Stellsignal ähnlich einer Rampenfunktion in die obere oder untere Begrenzung des Stellsignals läuft. Bei Verwendung eines Operationsverstärkers zur Realisierung des Reglers entsprechen diese Grenzen etwa den Versorgungsspannungen des Operationsverstärkers. Eine dauerhafte Fehlfunktion der Regelung des Schleifenstroms kann auf diese Weise zuverlässig erkannt werden.

In einer weiteren vorteilhaften Ausgestaltung kann ein Komparator zur Erzeugung des Anzeigesignals vorgesehen werden und das Anzeigesignal kann auf die Recheneinheit zur weiteren Behandlung eines Fehlerzustands geführt werden. In der Recheneinheit wird so eine zeitbezogene Auswertung des Anzeigesignals ermöglicht, so dass beispielsweise bei sprungförmigen Änderungen des auf die Regelung des Schleifenstroms gegebenen Sollwerts ein Abklingen von Einschwingvorgängen in der Regelung zur Vermeidung von Fehldiagnosen abgewartet werden kann. Da der jeweilige Verlauf des Sollwerts der Recheneinheit bekannt ist, kann die Auswahl der Überwachungsart durch die Recheneinheit in Abhängigkeit des Sollwertverlaufs erfolgen.

Wird aufgrund der Überwachung des Stellsignals ein Fehler des Reglers oder des Stellglieds durch die Recheneinheit festgestellt, leitet diese unverzüglich geeignete Maßnahmen zur Fehlerbehandlung ein. Dies kann beispielsweise die Ausgabe einer Fehlermeldung oder einer Meldung eines Wartungsbedarfs an eine übergeordnete Leitstation über die Zweidrahtleitung und/oder die Einnahme eines Sicherheitszustands des Feldgeräts sein.

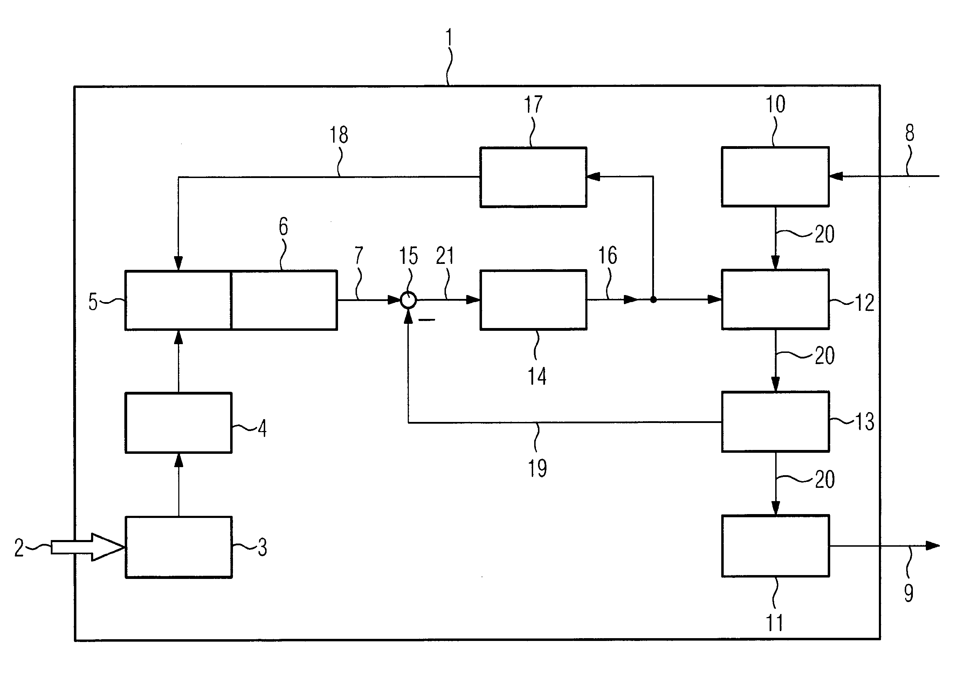

Anhand der Zeichnung, in der ein Ausführungsbeispiel der Erfindung dargestellt ist, werden im Folgenden die Erfindung sowie Ausgestaltungen und Vorteile näher erläutert.

Die Figur zeigt den prinzipiellen Aufbau eines Messumformers 1, der für einen Einsatz in einer automatisierungstechnischen Anlage zur Erfassung einer chemischen oder physikalischen Größe geeignet ist. Die chemische oder physikalische Größe 2 ist auf einen Sensor 3 geführt, der diese in ein elektrisches Signal wandelt. Das so erzeugte analoge Messsignal wird mit einem Analog/Digital-Umsetzer 4 digitalisiert und einer Recheneinheit 5 zugeführt, in welcher das Messsignal bezüglich Linearität und Temperaturverhalten korrigiert wird. Ein dem Messwert entsprechender, durch die Recheneinheit 5 berechneter digitaler Vorgabewert eines Schleifenstroms wird mit Hilfe eines nachgeschalteten Digital/Analog-Umsetzers 6 in einen analogen Sollwert 7 des Schleifenstroms gewandelt und einem Regelkreis zur Einstellung eines Schleifenstroms 20 in einer Zweidrahtleitung 8, 9, an welche der Messumformer 1 angeschlossen ist, zugeführt. Zum Anschluss des Messumformers 1 an die Zweidrahtleitung 8, 9 dienen ein Eingangsanschluss 10 bzw. ein Ausgangsanschluss 11. Der Schleifenstrom 20 fließt über den Eingangsanschluss 10, ein Stellglied 12, einen Shunt 13 zur Messung des Schleifenstroms und über den Ausgangsanschluss 11. Das Stellglied 12 kann in einfacher Weise aus einem Transistor bestehen, auf welchen eine Steuerspannung als Stellsignal 16 von einem als Operationsverstärker ausgeführten Regler 14 geführt ist. Der Shunt 13 ist durch einen Präzisionswiderstand realisiert. Die über dem Shunt 13 abfallende Spannung 19, die proportional zum Schleifenstrom 20 ist, wird auf eine Vergleichseinrichtung 15 zurückgeführt und dort zur Bestimmung einer Regelabweichung 21 von dem Sollwert 7 des Schleifenstroms subtrahiert. Der Regler 14 erhält die Regelabweichung 21 als Eingangsgröße und berechnet daraus einen Proportional- und einen Integralanteil entsprechend seiner Regelparameter, die beispielsweise mit Hilfe einer geeigneten Dimensionierung von Widerständen und Kondensatoren in der Beschaltung eines Operationsverstärkers voreingestellt sind. Im Normalfall, das heißt, wenn der gemessene Istwert 19 des Schleifenstroms 20 seinem Sollwert 7 nachgeführt werden kann, verschwindet die Regelabweichung 21 nach dem Abklingen eventueller Einschwingvorgänge und das Stellsignal 16 am Ausgang des Reglers 14 verbleibt innerhalb vorgegebener Grenzen. Treten jedoch Fehler in der Regeleinrichtung, insbesondere im Regler 14 oder in dem Stellglied 12, auf, hat dies in den meisten Fällen unmittelbar zur Folge, dass durch das Stellsignal 16 ein vorgegebener Wertebereich verlassen wird. Dies wird mit einer Einrichtung 17 zur Überwachung des Stellsignals festgestellt, die bei Verlassen des vorgegebenen Wertebereichs ein Anzeigesignal 18 zur Anzeige des Fehlerzustands an die Recheneinheit 5 ausgibt. Der so erkannte Fehler kann durch geeignete Ansteuerung einer Anzeigeeinheit des Messumformers 1, die in der Figur der Übersichtlichkeit wegen nicht dargestellt ist, einem Bediener oder über die Zweidrahtleitung 8, 9 einer übergeordneten Leitstation in einer automatisierungstechnischen Anlage gemeldet werden. Auf diese Weise wird mit vergleichsweise geringem Aufwand eine Überwachung von Komponenten in der Ausgangsschaltung des Messumformers 1 ermöglicht.

Im gezeigten Ausführungsbeispiel wurde ein Messumformer als Feldgerät erläutert. Selbstverständlich ist die Erfindung auch bei anderen Feldgerätetypen mit Analogausgang verwendbar, beispielsweise bei Stellgliedern wie Regelventilen oder bei einer speicherprogrammierbaren Steuerung mit Analogausgabebaugruppe, die beispielsweise zum Anschluss von Stellgliedern über Zweidrahtleitungen geeignet ist.

## Patentansprüche

1. Feldgerät zur Prozessinstrumentierung, insbesondere Messumformer (1),
mit einem Analogausgang (10, 11), an welchen eine Zweidrahtleitung (8, 9) zur Übertragung eines analogen Ausgangssignals (20) anschließbar ist,
mit einer Recheneinheit (5), durch welche ein dem analogen Ausgangssignal entsprechender Digitalwert ausgebbar ist,
mit einem der Recheneinheit (5) nachgeschalteten Digital/Analog-Umsetzer (6) zur Wandlung des Digitalwerts in einen analogen Sollwert (7) des Ausgangssignals,
mit einer Vergleichseinrichtung (15) zur Bildung einer Regelabweichung (21) aus dem Sollwert (7) und einem am Ausgang gemessenen Istwert (19) des analogen Ausgangssignals,
mit einem Regler (14) zur Erzeugung eines Stellsignals (16) zur Ausregelung einer Regelabweichung und
mit einem Stellglied (12) zur Einstellung des analogen Ausgangssignals in Abhängigkeit des Stellsignals,
**dadurch gekennzeichnet, dass** eine Einrichtung (17) zur Überwachung des Stellsignals auf Einhalten eines vorgebbaren Wertebereichs vorhanden ist und zur Erzeugung eines Anzeigesignals (18), wenn der Wertebereich verlassen wird.

2. Feldgerät nach Anspruch 1, **dadurch gekennzeichnet, dass** der Regler (14) als PI-Regler ausgeführt ist.

3. Feldgerät nach Anspruch 1 oder 2, **dadurch gekennzeichnet, dass** ein Komparator (17) zur Erzeugung des Anzeigesignals (18) vorgesehen ist und dass das Anzeigesignal auf die Recheneinheit (5) zur weiteren Behandlung eines bei Verlassen des Wertebereichs erkannten Fehlerzustands geführt ist.

## Claims

1. A field device for process instrumentation, in particular a measuring transducer (1),
comprising an analogue output (10, 11), to which a two-wire line (8, 9) can be connected for transmitting an analogue output signal (20),
a control unit (5), by means of which a digital value corresponding to the analogue output signal can be output,
a digital/analogue converter (6) arranged downstream of the computing unit (5) for converting the digital value into an analogue target value (7) of the output signal,
a comparison facility (15) for forming a control deviation (21) from the target value (7) and an actual value (19) of the analogue output signal measured at the output,
a controller (14) for generating an actuating signal (16) for controlling a control deviation and
an actuating element (12) for adjusting the analogue output signal as a function of the actuating signal,
**characterized in that**
a device (17) is present for monitoring whether the actuating signal remains within a predeterminable value range and for generating an indicator signal (18) if the value range is abandoned.

2. The field device as claimed in claim 1, **characterized in that** the controller (14) is embodied as a PI controller.

3. The field device as claimed in claim 1 or 2, **characterized in that** a comparator (17) is provided to generate the indicator signal (18) and that the indicator signal is led to the computing unit (5) for further treatment of an error state identified when abandoning the value range.

## Revendications

1. Appareil sur site pour l'instrumentation d'un processus, notamment transducteur (1) de mesure,
comprenant une sortie (10, 11) analogique, à laquelle peut être raccordée une ligne (8, 9) bifilaire, pour la transmission d'un signal (20) analogique de sortie,
comprenant une unité (5) informatique, par laquelle une valeur numérique, correspondant au signal analogique de sortie, peut être émise,
comprenant un convertisseur (6) numérique / analogique, monté en aval de l'unité (5) informatique, pour la transformation de la valeur numérique en une valeur (7) analogique de consigne du signal de sortie,
comprenant un dispositif (15) de comparaison, pour la formation d'un écart (21) de régulation, à partir de la valeur (7) de consigne et d'une valeur (19) réelle mesurée à la sortie du signal analogique de sortie,
comprenant un régulateur (14) pour la production d'un signal (16) de régulation, pour la régulation d'un écart de régulation et
comprenant un organe (12) de réglage, pour le réglage du signal analogique de sortie en fonction du signal de régulation,
**caractérisé en ce qu'**il y a un dispositif (17) contrôlant que le signal de régulation se maintient dans une plage de valeurs pouvant être donnée à l'avance et produisant un signal (18) d'indication, si l'on quitte la plage de valeurs.

2. Appareil sur site suivant la revendication 1, **caractérisé en ce que** le régulateur (14) est réalisé en régulateur PI.

3. Appareil sur site suivant la revendication 1 ou 2, **caractérisé en ce qu'**il est prévu un comparateur (17) pour la production du signal (18) d'indication et **en ce que** le signal d'indication est envoyé à l'unité (5) informatique pour le traitement ultérieur d'un état défaillant révélé par le fait que l'on quitte la plage de valeurs.
